# FASCICULE DE BREVET EUROPEEN

(11) **EP 3 551 975 B1**
(45) Date de publication et mention de la délivrance du brevet: **19.08.2020**
(21) Numéro de dépôt: 17811542.4
(22) Date de dépôt: 05.12.2017
(51) Int. Cl.: G01J 5/08, G01J 5/06, G01J 5/00

(54) **SYSTÈME DE DÉTECTION DE RAYONNEMENTS ÉLECTROMAGNÉTIQUES**
SYSTEM ZUR ERKENNUNG VON ELEKTROMAGNETISCHER STRAHLUNG
SYSTEM FOR DETECTING ELECTROMAGNETIC RADIATION

(30) Priorité: 06.12.2016 FR 1662017
(43) Date de publication de la demande: 16.10.2019
(73) Titulaire: Safran Electronics & Defense, 92100 Boulogne-Billancourt (FR)
(72) Inventeur: DAVENEL, Arnaud, 92100 Boulogne Billancourt (FR)
(74) Mandataire: Cabinet Le Guen Maillet
(86) Numéro de dépôt international: PCT/EP2017/081552
(87) Numéro de publication internationale: WO 2018/104317

(56) Documents cités:
- FR-A1- 2 887 627
- US-A- 4 937 450
- US-A- 5 408 100
- US-A1- 2011 181 730
- US-B1- 6 222 454

## Description

L'invention concerne un système de détection de rayonnements électromagnétiques, tels que des rayonnements infrarouges.

Les systèmes de détection de rayonnements électromagnétiques sont couramment utilisés pour équiper des autodirecteurs de projectiles autoguidés, de type missiles ou roquettes, des drones ou encore des caméras thermiques, jumelles et lunettes pour visions nocturnes, télescopes et plus généralement tout dispositif d'observation basé sur une détection de rayonnements électromagnétiques.

Généralement, les systèmes de détection de rayonnements électromagnétiques sont équipés d'un capteur de rayonnements électromagnétiques de type matrice FPA (matrice de plan focal, « Focal Plan Array » en terminologie anglo-saxonne). Un capteur de rayonnements électromagnétiques, appelé simplement *capteur* par la suite, est composé d'une pluralité de détecteurs sensibles aux rayonnements électromagnétiques tels que des thermodétecteurs ou des photodétecteurs. Chaque photodétecteur transforme par exemple les photons issus de rayonnements électromagnétiques en paires électron-trou par effet photoélectrique puis collecte les électrons dans un puits de potentiel. On parle alors de remplissage du puits de potentiel. Le nombre d'électrons collectés est proportionnel au nombre de photons reçus. Ces capteurs permettent d'obtenir des images composées de pixels, chaque pixel étant représenté par au moins une valeur issue d'au moins un détecteur dudit capteur, chaque valeur dépendant d'un niveau de remplissage en électron des puits de potentiel. Afin d'éviter que les puits soient remplis par des paires électron-trou générées par le matériau photosensible du capteur (i.e. le substrat), ces capteurs doivent être refroidis.

En outre, afin d'éviter que des photons, dits photons parasites, émis hors d'un champ d'observation d'un système de détection de rayonnements électromagnétiques, créent également des paires électron-trou inutiles, ledit système comprend un diaphragme refroidi. Ce diaphragme permet de limiter le nombre de photons parasites atteignant le capteur.

Chaque refroidissement (du substrat et du diaphragme) est réalisé par un cryostat (« dewar » en terminologie anglo-saxonne).

Des illustrations de l'état de la technique sont données par les documents US5408100, US20110181730, US4937340 et FR2887627.

Du fait d'un effet de dispersion des réponses individuelles de chaque détecteur d'un capteur, il est indispensable de calibrer en gain et en valeur de décalage (« offset » en terminologie anglo-saxonne) chaque détecteur dudit capteur. Une calibration en gain correspondant à une mesure d'une pente d'une courbe, il est nécessaire d'acquérir au moins deux signaux (*i*.*e*. deux valeurs) correspondant à deux remplissages de puits différents. La valeur de décalage est quant à elle prise en un point de remplissage de puits. Une telle série d'acquisition est en général appelée calibration deux points et quelquefois trois points. Afin que chaque mesure soit pertinente, les remplissages doivent varier à temps d'intégration fixe. Ils doivent donc correspondre à des scènes différentes. En outre, en vue de corriger des effets photométriques, le système optique complet est idéalement pris en compte dans chacune des mesures.

Un exemple de l'état de la technique peut être trouvé dans le document US6222454 B1.

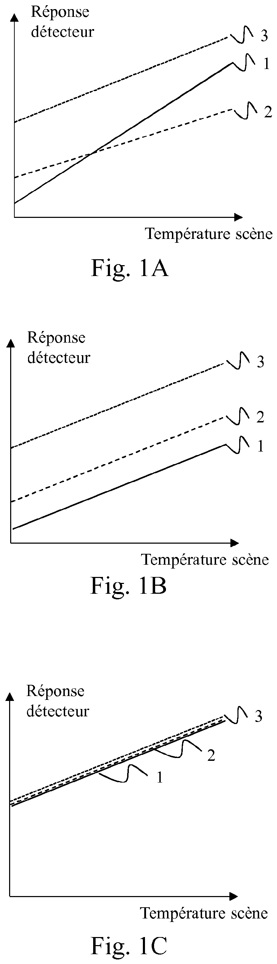

La Fig. 1A représente des courbes de réponse d'un premier et d'un deuxième détecteurs d'un détecteur d'un capteur en fonction d'une température de scène.

Une courbe 1 représente la courbe de réponse d'un premier détecteur. Une courbe 2 représente la courbe de réponse d'un deuxième détecteur. Les courbes de réponse des premier et deuxième détecteurs sont totalement différentes à la fois en pente et en point d'origine. Un objectif de la calibration est de faire en sorte que la courbe de réponse de chaque détecteur corresponde à une courbe de réponse idéale représentée en Fig. 1A par une courbe 3.

La Fig. 1B représente une première étape de calibration au cours de laquelle la pente de la courbe de réponse de chaque détecteur est corrigée. Une fonction permettant de déterminer une valeur de gain à appliquer à la courbe de réponse en fonction d'une valeur de température de scène est alors déterminée pour le premier et le deuxième détecteurs. Comme nous le représentons en Fig. 1B, une application de cette fonction aux courbes 1 et 2 permet de redresser ces courbes de sorte à obtenir des courbes ayant une pente identique à la courbe 3.

La Fig. 1C représente une seconde étape de calibration au cours de laquelle la valeur de décalage de la courbe de réponse de chaque détecteur est corrigée.

La valeur de décalage de chaque courbe est déterminée de manière à obtenir une courbe de réponse confondue avec la courbe idéale pour chaque détecteur.

Classiquement, les gains sont calculés une fois en usine tandis que les valeurs de décalage sont calculées en produit (c'est-à-dire sur le terrain d'utilisation du système de détection de rayonnements électromagnétiques). Toutefois, de nombreuses matrices FPA, par exemple celles composées de MCT (Mercure Cadmium Tellure), présentent des instabilités de gain. En conséquence, pour un détecteur d'un capteur, la correction de gain appliquée est erronée et la correction en valeur de décalage ne peut compenser cette erreur. Le détecteur concerné est alors mal corrigé. Ces mauvaises corrections peuvent entraîner dans une image produite par le capteur, des apparitions de pixels, dits *pixels atypiques*, incohérents avec les autres pixels de l'image. Ces instabilités de gain sont d'autant plus gênantes que les pixels affectés varient d'une utilisation à l'autre (*i.e.* d'un démarrage à l'autre) des systèmes de détection de rayonnements électromagnétiques. De plus, les systèmes de détection de rayonnements électromagnétiques ayant une durée de vie relativement longue (par exemple de « 15 » à « 20 » ans), ces instabilités de gain peuvent également être liées à un vieillissement du capteur pendant cette durée de vie.

Afin d'identifier ces pixels atypiques, plusieurs stratégies sont possibles. En usine et par « anticipation », des méthodes de calibration dites « durcies» réalisent des calibrations successives afin d'augmenter une probabilité de détecter les pixels dont le gain varie ou risque de varier à l'avenir.

Pour gérer le vieillissement des capteurs, certaines méthodes tentent de démontrer la stabilité des gains du capteur sur la durée de vie du système de détection de rayonnements électromagnétiques. Une autre solution consiste à mettre en œuvre des calibrations pendant la durée de vie du dispositif de détection de rayonnements électromagnétiques.

Ces méthodes de calibration sont longues et coûteuses. Par ailleurs, elles nécessitent d'être mises en œuvre sur banc de test, ce qui implique qu'en cas de calibration régulière, le système de détection de rayonnements électromagnétiques doit être acheminé et immobilisé régulièrement en usine.

Des méthodes de calibration embarquées, dites *méthodes actives*, se développent toutefois peu à peu. Ces méthodes ont pour avantage principal de ne pas nécessiter un retour en usine pour leur mise en œuvre. On connaît par exemple une méthode de détection *a posteriori* des pixels atypiques par analyse des valeurs de décalage et une autre utilisant un dispositif de calibration deux points utilisant des corps noirs embarqués dans le système de détection de rayonnements électromagnétiques et permettant le calcul en produit des gains. Les méthodes actives existantes complexifient notablement le système optique et doivent généralement utiliser un module de Peltier pour obtenir un refroidissement thermoélectrique. Utiliser un module de Peltier entraîne une augmentation de consommation électrique et des problèmes d'encombrement dans le système de détection de rayonnements électromagnétiques dus au volume occupé par le module de Peltier. On note de plus que ces méthodes actives ne peuvent être (sauf cas exceptionnel) externes, ce qui peut entraîner des calculs de gains erronés.

Les méthodes de calibration passives et actives sont généralement basées sur une détection des pixels atypiques en observant les gains et/ou les valeurs de décalage des détecteurs correspondants. Un grand nombre de méthodes de détection de pixels atypiques existe. Ces méthodes permettent d'identifier une grande partie des pixels atypiques mais ne permettent généralement pas de les identifier tous. Il est fréquent de plus que ces méthodes déclarent «par sécurité» (*i.e.* sur-déclarent) comme pixels atypiques des pixels valides.

Il est souhaitable de pallier ces inconvénients de l'état de la technique. Il est notamment souhaitable de proposer un système de détection de rayonnements électromagnétiques embarquant des moyens permettant une mise en œuvre d'une méthode de calibration active qui fonctionne sans module de Peltier, qui ne sur-déclare pas des pixels atypiques, et qui permet d'éviter une mise en œuvre d'une calibration durcie. Il est de plus souhaitable que le système de détection de rayonnements électromagnétiques permette une calibration deux points.

Selon un premier aspect de la présente invention, la présente invention concerne un système de détection de rayonnements électromagnétiques comprenant : un boîtier définissant une enceinte dans laquelle règne un vide partiel comprenant une fenêtre transparente auxdits rayonnements électromagnétiques ; un doigt froid présentant une paroi latérale fermée à une extrémité par une paroi terminale située au droit de la fenêtre; un capteur, monté sur la paroi terminale, présentant une surface supérieure plane disposée en regard de la fenêtre comprenant des détecteurs sensibles aux rayonnements électromagnétiques et refroidi par le doigt froid, ledit capteur définissant un axe optique perpendiculaire à la surface supérieure plane et centré par rapport à celle-ci ; un écran froid entourant le capteur, sensiblement en forme de dôme, monté sur le doigt froid et de révolution autour de l'axe optique, et comprenant une extrémité supérieure, disposée entre la fenêtre et le capteur définissant un diaphragme de forme circulaire centré sur l'axe optique et une paroi latérale reliant une base de l'écran froid à l'extrémité supérieure présentant une face interne à concavité tournée vers l'axe optique. Le système comprend : au moins un filtre de rayonnement électromagnétique passe bande ayant un coefficient de transmission prédéfini, chaque filtre étant mobile et pouvant prendre une première position dans laquelle il est placé à l'extérieur du boîtier en regard de la fenêtre et une deuxième position dans laquelle il est placé de sorte à ne filtrer aucun rayonnement électromagnétique reçu par le système, dans ladite première position chaque filtre présente en section dans tout plan sécant contenant l'axe optique une forme concave tournée vers le capteur ayant un profil à base de conique et/ou d'asphérique et réfléchit le plan focal à l'intérieur du boîtier ; et, des moyens de traitement permettant d'évaluer pour chaque détecteur du capteur un gain et une valeur de décalage en utilisant une première valeur fournie par ledit détecteur lorsque chaque filtre est dans la deuxième position et au moins une seconde valeur fournie par ledit détecteur lorsqu'un filtre parmi les au moins un filtre est dans la première position.

L'utilisation d'au moins un filtre dans le système de détection de rayonnements électromagnétiques permet de réaliser simplement au moins une calibration deux points de chaque détecteur du capteur. Ce système ne comprend alors pas de module de Peltier.

Selon un mode de réalisation, au moins un premier filtre parmi les au moins un filtre a une surface dont toute section par un plan contenant l'axe optique est en forme d'ellipse ou de cercle tronqué par un plan perpendiculaire à l'axe optique et de révolution autour de l'axe optique.

Selon un mode de réalisation, au moins un filtre parmi les au moins un filtre réfléchit le plan focal à l'intérieur de l'écran froid.

Selon un mode de réalisation, chaque foyer de l'ellipse de la section en forme d'ellipse tronquée ou du cercle de la section en forme de cercle tronqué du premier filtre est placé sur le bord de la fenêtre.

Selon un mode de réalisation, le boîtier comprend une surface interne réfléchissant les rayonnements électromagnétiques et l'écran froid comprend une surface externe absorbant les rayonnements électromagnétiques.

Selon un mode de réalisation, chaque foyer de l'ellipse de la section en forme d'ellipse tronquée ou du cercle de la section en forme de cercle tronqué du premier filtre est placé sur le bord du diaphragme.

Selon un deuxième aspect de l'invention, l'invention concerne un procédé de calibration de détecteurs sensibles aux rayonnements électromagnétiques d'un capteur mis en œuvre par le système de détection de rayonnements électromagnétiques selon le premier aspect. Le procédé comprend : positionner un filtre parmi les au moins un filtre dans la première position ; déclencher une acquisition d'une première matrice de valeurs par le capteur, chaque valeur de la matrice de valeurs étant issue d'un détecteur du capteur IR; positionner ledit filtre dans la deuxième position ; déclencher une acquisition d'une deuxième matrice de valeurs par le capteur ; déterminer pour chaque détecteur du capteur, un gain et une valeur de décalage à appliquer aux valeurs issues dudit détecteur, chaque détermination d'un gain et d'une valeur de décalage d'un détecteur utilise une valeur de la première matrice correspondant audit détecteur et une valeur de la deuxième matrice correspondant audit détecteur.

Selon un troisième aspect de l'invention, l'invention concerne un programme d'ordinateur, comprenant des instructions pour mettre en œuvre, par un dispositif, le procédé selon le deuxième aspect, lorsque ledit programme est exécuté par un processeur dudit dispositif.

Selon un quatrième aspect de l'invention, l'invention concerne des moyens de stockage, stockant un programme d'ordinateur comprenant des instructions pour mettre en œuvre, par un dispositif, le procédé selon le deuxième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La Fig. 1A représente des courbes de réponse d'un premier et d'un deuxième détecteurs d'un capteur en fonction d'une température de scène ;
- La Fig. 1B représente une première étape de calibration au cours de laquelle la pente de la courbe de réponse de chaque détecteur est corrigée ;
- La Fig. 1C représente une seconde étape de calibration au cours de laquelle la valeur de décalage de la courbe de réponse de chaque détecteur est corrigée ;
- La Fig. 2 représente une vue de coupe d'un système de détection de rayonnements infrarouges connue de l'art antérieur;
- La Fig. 3 représente une vue de coupe d'un système de détection de rayonnements infrarouges selon l'invention;
- la Fig. 4 représente une vue de coupe d'une partie du système de détection de rayonnements infrarouges selon l'invention ;
- la Fig. 5 illustre schématiquement un exemple d'une architecture matérielle d'un module de traitement de données issues d'un capteur IR ; et,
- la Fig. 6 représente un procédé de calibration selon l'invention.

L'invention est décrite par la suite dans un contexte de système de détection de rayonnements infrarouges (IR). L'invention s'applique toutefois à tout système de détection de rayonnements électromagnétiques et pour d'autres rayonnements que les rayonnements infrarouges.

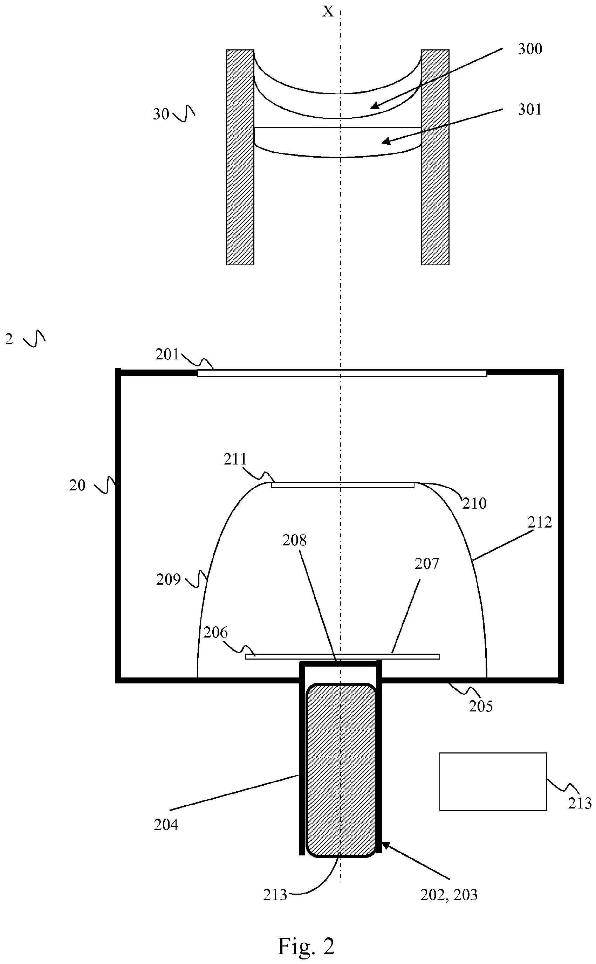

La **Fig. 2** représente une vue de coupe d'un système de détection de rayonnements infrarouges connue de l'art antérieur.

Un système de détection de rayonnements infrarouges 2, appelé *système IR* par la suite, comprend un boîtier 20 définissant une enceinte dans laquelle règne un vide partiel (environ 10⁻⁶ bars), munie d'une fenêtre 201 transparente aux rayonnements IR.

Le système IR 2 comprend un doigt froid 202 comprenant un cryostat 203 (« Dewar » en terminologie anglo-saxonne) propre à recevoir un échangeur de chaleur 213. Le doigt froid 202 présente une paroi latérale 204 fermée à une extrémité par une paroi terminale 208 située au droit de la fenêtre 201.

Un capteur infrarouge 207, appelé *capteur IR* par la suite, est monté sur la paroi terminale 208 de manière à pouvoir être frappé par un rayonnement IR traversant la fenêtre 201, tout en étant refroidi par le doigt froid 202. Le capteur IR 207 présente une surface supérieure plane 206, rectangulaire ou circulaire, disposée en regard de la fenêtre 201 et constituée d'une matrice de détecteurs sensibles aux rayonnements IR. Le capteur IR 207 définit un axe optique *X* perpendiculaire à la surface supérieure plane 206 et centré par rapport à celle-ci.

Dans beaucoup d'applications, les systèmes IR sont utilisés pour observer au moins un objet dans une scène. Ladite scène peut être divisée en deux zones : une première zone comprenant l'objet, et une deuxième zone comprenant tout ce qui ne fait pas partie de l'objet que nous appelons *arrière-plan.* L'objet et l'arrière-plan ont généralement des températures proches, aux alentours de « 300 °K » et génèrent donc des rayonnements IR similaires. Dans ces conditions, il peut être difficile de distinguer l'objet de l'arrière-plan. Pour pallier ce problème, les systèmes IR ont généralement un champ de vision limité de manière à limiter les rayonnements perçus par le capteur provenant de l'arrière-plan de l'objet observé. Comme nous l'avons vu plus haut, une telle limitation est par exemple obtenue en intercalant un diaphragme refroidi entre l'objet observé et le capteur.

Le système IR 1 comprend donc un écran froid 212 sensiblement en forme de dôme entourant le capteur IR 207, monté sur le doigt froid 202 et de révolution autour de l'axe optique *X* du capteur IR 207. L'écran froid 212 est destiné à limiter les rayonnements IR susceptibles d'atteindre le capteur IR 207. L'écran froid 212 présente une base 205, par laquelle l'écran froid 212 est monté sur le cryostat 203. L'écran froid 212 comprend par ailleurs une extrémité supérieure 210, disposée entre la fenêtre 201 et le capteur IR 207 définissant un diaphragme 211 de forme circulaire centré sur l'axe optique *X*. L'écran froid 212 comprend également une paroi latérale 209 reliant la base 205 à l'extrémité supérieure 210. La paroi latérale 209 présente une face interne à concavité tournée vers l'axe optique *X*.

Le système IR 2 comprend de plus un système de lentilles 30 adapté pour focaliser des rayonnements IR émanant d'un objet observé sur le capteur IR 207. Le système de lentilles 30 peut comprendre une pluralité d'éléments optiques. Dans un mode de réalisation, le système de lentilles 30 comprend une première lentille frontale 300 et une deuxième lentille intermédiaire 301. Chaque lentille est transmissive pour un ensemble de longueurs d'ondes électromagnétiques correspondant à une bande d'infrarouge d'intérêt pour le système IR 2. Le système de lentilles 30 est associé à un plan focal perpendiculaire à l'axe optique *X*. Le capteur IR 207 se trouve dans le plan focal associé au système de lentilles 30.

On note que le système de lentilles 30 est externe au cryostat et n'est donc pas refroidi.

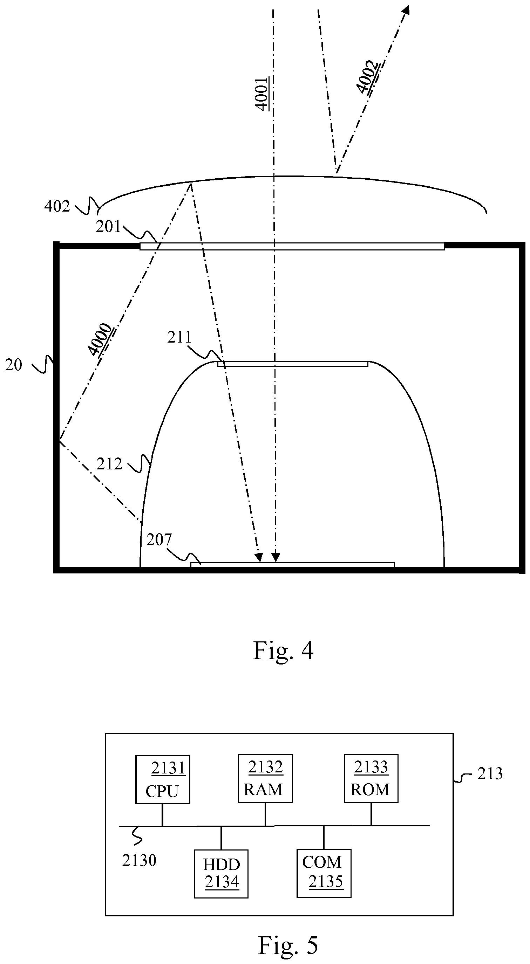

Par ailleurs, le système IR 3 comprend un module de traitement 213 que nous décrivons par la suite en relation avec la Fig. 5. Le module de traitement 213 reçoit une matrice de valeurs du capteur IR 207, chaque valeur étant issue d'un détecteur du capteur IR 207. Le module de traitement 213 applique un traitement à chacune des valeurs reçues afin de générer une image à partir de la matrice de valeurs. Le module de traitement 213 applique notamment un gain et une valeur de décalage prédéfinie à chacune des valeurs de la matrice de valeurs.

La **Fig. 5** illustre schématiquement un exemple d'une architecture matérielle d'un module de traitement de valeurs 213 issues du capteur IR 207.

Selon l'exemple d'architecture matérielle représenté à la Fig. 5, le module de traitement 213 comprend alors, reliés par un bus de communication 2130 : un processeur ou CPU (« Central Processing Unit » en anglais) 2131 ; une mémoire vive RAM (« Random Access Memory » en anglais) 2132; une mémoire morte ROM (« Read Only Memory » en anglais) 2133 ; une unité de stockage telle qu'un disque dur ou un lecteur de support de stockage, tel qu'un lecteur de cartes SD (« Secure Digital » en anglais) 2134 ; au moins une interface de communication 2135 permettant au module de traitement 213 de communiquer avec, par exemple, le capteur IR 207 et un module d'affichage d'images non représenté.

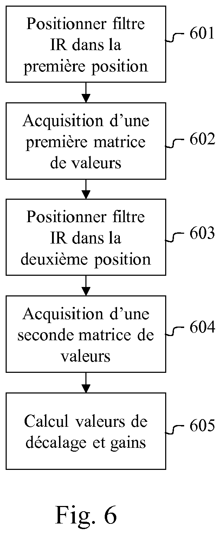

Le processeur 2131 est capable d'exécuter des instructions chargées dans la RAM 2132 à partir de la ROM 2133, d'une mémoire externe (non représentée), d'un support de stockage (tel qu'une carte SD), ou d'un réseau de communication. Lorsque le système IR 2 est mis sous tension, le processeur 2131 est capable de lire de la RAM 2132 des instructions et de les exécuter. Ces instructions forment un programme d'ordinateur causant la mise en œuvre, par le processeur 2131, de procédés de traitements des valeurs issues des détecteurs du capteur IR 207. Comme nous le décrivons par la suite, le système de traitement 213 est notamment apte à mettre en œuvre un procédé selon l'invention, décrit en relation avec la Fig. 6, permettant d'évaluer pour chaque détecteur du capteur IR 207 un gain et une valeur de décalage.

Les procédés mis en œuvre par le système de traitement 213, et notamment le procédé décrit en relation avec la Fig. 6, peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gâte Array » en anglais) ou un ASIC (« Application-Specific Integrated Circuit » en anglais).

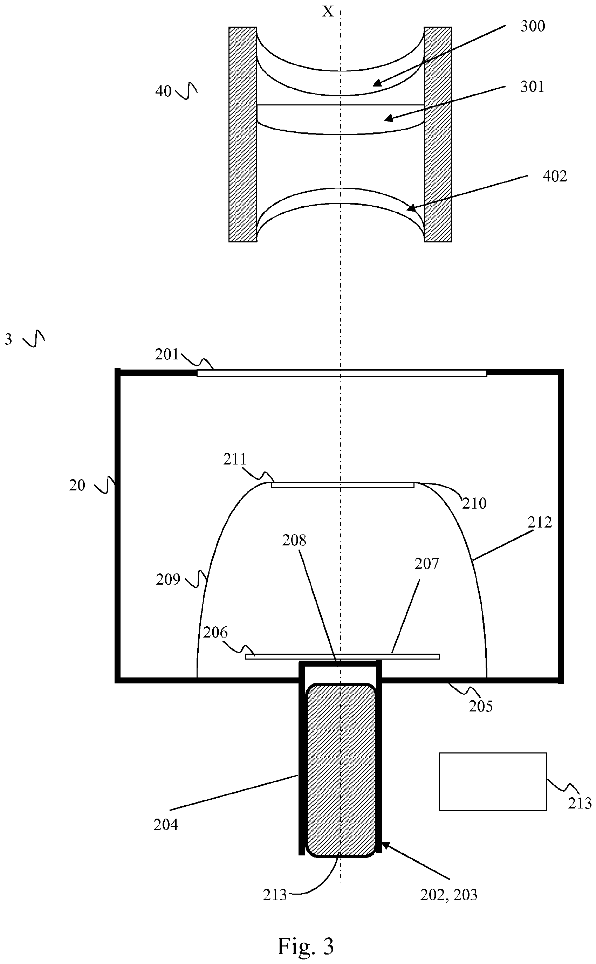

La **Fig. 3** représente une vue de coupe d'un système de détection de rayonnements infrarouges selon l'invention.

Le système IR 3 de la Fig. 3 reprend le système IR 2 de la Fig. 2. Chaque élément identique dans les Figs. 2 et 3 conserve la même référence. Les nouveaux éléments ou les éléments modifiés ont des références différentes.

Dans un mode de réalisation, le boîtier 20 reste en tout point identique dans les Figs. 2 et 3. Par contre, le système de lentilles 30 est remplacé par un système de lentilles 40. On retrouve dans le système de lentilles 40, les lentilles frontale 300 et intermédiaire 301. Le système de lentilles 40 est associé à un plan focal perpendiculaire à l'axe optique X dans lequel se trouve le capteur IR 207.

Une différence majeure entre le système IR 3 et le système IR 2 réside dans une insertion d'au moins un filtre infrarouge, appelé *filtre IR* par la suite, en entrée du boîtier *20* (*i.e.* à l'extérieur du boîtier 20 en regard de la fenêtre 201). Comme nous le verrons par la suite, l'insertion d'au moins un filtre IR dans le système IR 3 a pour objectif de permettre au moins une calibration deux points. Chaque filtre IR inséré est un filtre passe bande, mobile, de transmission donnée *T*, que l'on déplace devant la fenêtre 201. En changeant de filtre IR, du fait des transmissions *T* différentes desdits filtres IR, les remplissages des puits varient conformément aux besoins liés à une calibration deux points et permettent de calculer les gains et valeur de décalage de chaque détecteur du capteur IR 207 (*i.e.* en modulant le niveau de remplissage en électron des puits de potentiel des détecteurs du capteur IR 207 sans changer le temps d'intégration et en incluant le système optique complet). Ainsi, le filtre IR peut prendre une première position dans laquelle il est placé à l'extérieur du boîtier 20 en regard de la fenêtre 201 et une deuxième position dans laquelle il est placé de sorte à ne filtrer aucun rayonnement électromagnétique reçu par le système IR 3. Dans la première position, le filtre IR est de forme concave tournée vers le capteur IR 207 ayant un profil à base de conique et/ou d'asphérique et réfléchissant le plan focal à l'intérieur du boîtier 20 par la fenêtre 201 ou, dans un mode préférentiel, à l'intérieur de l'écran froid 212 par le diaphragme 211. En termes de forme, chaque filtre IR présente donc en section dans tout plan sécant contenant l'axe optique *X* une forme concave tournée vers le capteur IR 207 ayant un profil à base de conique et/ou d'asphérique. Chaque filtre est par ailleurs caractérisé par un coefficient de transmission prédéfini *T* et peut se placer sur ou en dehors d'un chemin optique du système de lentilles 40.

Le système IR 3 comprend des moyens de déplacement de chaque filtre IR. Ces moyens de déplacement comprennent par exemple, pour un filtre IR, un moteur et un bras sur lequel est fixé le filtre IR apte à positionner ou pas le filtre IR en regard de la fenêtre 201.

Dans un mode de réalisation, chaque filtre IR peut être inséré entre la dernière lentille du système de lentilles 40 (*i.e.* ici la lentille intermédiaire 201) et la fenêtre 201 à une position permettant de réfléchir le plan focal au moins à l'intérieur du boîtier 20 et préférentiellement à l'intérieur de l'écran froid 212.

Dans un mode de réalisation, le système IR 3 comprend un seul filtre IR 402.

Dans un mode de réalisation, le filtre IR 402 a une surface dont toute section par un plan contenant l'axe optique *X* est en forme d'ellipse tronquée par un plan perpendiculaire à l'axe optique *X* et de révolution autour de l'axe optique.

Dans un mode de réalisation, le filtre IR 402 a une surface dont la section par un plan contenant l'axe optique est en forme de cercle tronqué par un plan perpendiculaire à l'axe optique *X* et de révolution autour de l'axe optique, un cercle étant un cas particulier d'ellipse.

Dans un mode de réalisation, le filtre IR 402 peut prendre deux positions dans le système IR 3 : dans la première position, tous les rayonnements IR atteignant le capteur IR 207 ont traversé le filtre IR 402. La deuxième position correspond à une absence de filtre IR dans le système IR 3. Dans cette deuxième position du filtre IR 402, le système IR 3 est donc équivalent au système IR 2 et ne filtre donc aucun rayonnement électromagnétique reçu par le système IR 3. Le déplacement du filtre alternativement dans deux positions différentes permet de fournir au système IR 3 (*i.e.* au capteur IR 207) deux niveaux de remplissage du puits de potentiel de chaque détecteur du capteur IR 207 différents à un même temps d'intégration, ce qui est équivalent à deux acquisitions d'images à deux températures de corps noirs différentes et permet le calcul du gain et de la valeur de décalage à appliquer aux valeurs issues de chaque détecteur.

Dans un mode de réalisation, lorsque le filtre est dans la première position, chaque foyer de l'ellipse de la section en forme d'ellipse tronquée (respectivement du cercle de la section en forme de cercle tronqué) du filtre IR 402 est placé sur le bord de la fenêtre 201. Un tel positionnement des foyers de l'ellipse de la section en forme d'ellipse tronquée (respectivement du cercle de la section en forme de cercle tronqué) permet d'assurer que le filtre IR 402 réfléchit le plan focal à l'intérieur du boîtier 20. Ce positionnement des foyers de l'ellipse de la section en forme d'ellipse tronquée est appelé par la suite *positionnement général.*

Dans un mode de réalisation, lorsque le filtre est dans la première position, chaque foyer de l'ellipse de la section en forme d'ellipse tronquée (respectivement du cercle de la section en forme de cercle tronqué) du filtre IR 402 est placé sur le bord du diaphragme 211. Un tel positionnement des foyers de l'ellipse de la section en forme d'ellipse (respectivement du cercle de la section en forme de cercle) permet d'assurer que le filtre IR 402 réfléchit le plan focal à l'intérieur de l'écran froid 212. Ce positionnement des foyers de l'ellipse de la section en forme d'ellipse tronquée est appelé par la suite *positionnement optimal.*

Dans un mode de réalisation, le positionnement des foyers de l'ellipse de la section en forme d'ellipse tronquée du filtre IR 402 est déterminé en utilisant des techniques de lancés de rayons afin d'assurer que le filtre IR 402 réfléchit le plan focal à l'intérieur de l'écran froid 212 ou à l'intérieur du boîtier 20.

La **Fig. 4** représente une vue de coupe simplifiée d'une partie du système de détection de rayonnements infrarouges selon l'invention.

Les références communes entre la Fig. 3 et la Fig. 4 correspondent à des éléments identiques. On considère dans la Fig. 4 que le filtre IR 402 est dans la première position. Des rayonnements IR 4000 à 4002 sont représentés en Fig. 4. Deux cas sont alors à distinguer.

Dans un premier cas, les foyers de la section en forme d'ellipse sont dans le positionnement optimal. Dans ce cas, tous les rayonnements IR issus du système de lentilles 30 et traversant le filtre IR 402 (tels que le rayonnement IR 4001) et tous les rayonnements IR issus de l'intérieur du boîtier 20 et réfléchis par le filtre IR 402 (tels que le rayonnement IR 4000 émis par l'écran froid 212) convergent à l'intérieur de l'écran froid 212. On note qu'avec un coefficient de transmission *T*, *T* % des rayonnements IR issus du système de lentilles 40 traversent le filtre IR 402 et (100-*T*)% des rayonnements IR issus de l'intérieur du boîtier 20 sont réfléchis par le filtre IR 402. De même, (100-*T*)% des rayonnements IR issus du système de lentilles 40 sont réfléchis par le filtre IR 402 (tels que le rayonnement 4002) et *T*% des rayonnements IR issus de l'intérieur du boîtier 20 traversent le filtre IR 402.

Dans un deuxième cas, les foyers de la section en forme d'ellipse sont dans le positionnement général. Dans ce cas, on ne peut pas assurer que tous les rayonnements IR issus de l'intérieur du boîtier 20 et réfléchis par le filtre IR 402 convergent à l'intérieur de l'écran froid 212. En effet, certains rayonnements IR issus de l'intérieur du boîtier 20 pourraient être réfléchis par la surface interne du boîtier 20 ce qui provoquerait des rayonnements parasites qui pourraient atteindre le capteur IR 207. Pour éviter cela, il convient de spécifier la surface interne du boîtier 20 réfléchissante et la surface externe de l'écran froid 212 absorbante, par exemple une peinture antireflets, un dépôt ou un traitement absorbant et ou diffusant adapté.

Dans un mode de réalisation, le coefficient de transmission T est égal à « 50% ».

Dans un mode de réalisation, le système IR 3 comprend un premier et un deuxième filtres IR, chacun associé à des coefficients de transmission différents. Le premier filtre IR est associé à un coefficient de transmission *T*₁ par exemple égal à 30% et le deuxième filtre IR est associé à un coefficient de transmission *T*₂ par exemple égal à 70%. Comme le filtre IR 302, le premier et le deuxième filtres IR peuvent être déplacés dans la première ou dans la deuxième position. Il existe alors trois configurations du système IR 3 : une première configuration dans laquelle le premier et le deuxième filtres sont dans la deuxième position ; une deuxième configuration dans laquelle le premier filtre est dans la première position et le second filtre est dans la deuxième position ; une troisième configuration dans laquelle le premier filtre est dans la deuxième position et le deuxième filtre est dans la première position. Ces trois configurations permettent alors une calibration trois points. Avec un seul filtre, la calibration deux points présente des performances similaires à la calibration 3 points, bien que différentes du point de vue de la correction des pixels, au sens où une des mesures servant au calcul du gain sert également au calcul de la valeur de décalage.

La Fig. 6 représente un exemple de procédé de calibration selon l'invention.

Le procédé de la Fig. 6 est mis en œuvre par le module de traitement 213 du système IR 3. Le procédé de la Fig. 6 peut être lancé à tout moment par un opérateur par exemple en appuyant sur un bouton (non représenté) de système IR 3. Lors de la mise en œuvre du procédé, le système IR 3 visualise une même scène pendant toute la durée du procédé. Dans l'exemple de la Fig. 6, le système IR 3 comprend un seul filtre IR 402.

Dans une 601, le module de traitement 213 transmet une commande au moyen de déplacement du filtre IR 402 de manière à positionner le filtre IR 402 dans la première position.

Dans une étape 602, le module de traitement 213 déclenche une acquisition d'une première matrice de valeurs par le capteur IR 207, chaque valeur de la matrice de valeurs étant issue d'un détecteur du capteur IR 207. Une fois acquise, la première matrice de valeurs est stockée dans l'unité de stockage 2134 du module de traitement 213.

Dans une étape 603, le module de traitement 213 transmet une commande au moyen de déplacement du filtre IR 402 de manière à positionner le filtre IR 402 dans la deuxième position.

Dans une étape 604, le module de traitement 213 déclenche une acquisition d'une deuxième matrice de valeurs par le capteur IR 207. Une fois acquise, la deuxième matrice de valeurs est stockée dans l'unité de stockage 2134 du module de traitement 213.

Dans une étape 605, le module de traitement effectue une calibration deux points de chaque détecteur du capteur IR 207 afin de déterminer pour chaque détecteur, un gain et une valeur de décalage à appliquer aux valeurs issues dudit détecteur. Chaque calibration deux points d'un détecteur utilise une valeur de la première matrice correspondant audit détecteur et une valeur de la deuxième matrice correspondant audit détecteur.

Le procédé décrit en relation avec la Fig. 6 est applicable lorsque le système IR 3 comprend plus d'un filtre IR en positionnant alternativement chaque filtre IR dans la première ou la deuxième position. Lorsqu'un filtre est dans la première position, chaque autre filtre est dans la deuxième position.

## Revendications

1. Système de détection de rayonnements électromagnétiques comprenant :
un boîtier (20) définissant une enceinte dans laquelle règne un vide partiel comprenant une fenêtre (201) transparente auxdits rayonnements électromagnétiques ;
un doigt froid (202) présentant une paroi latérale (204) fermée à une extrémité par une paroi terminale (208) située au droit de la fenêtre (201) ;
un capteur (207), monté sur la paroi terminale (208), présentant une surface supérieure plane (206) disposée en regard de la fenêtre (201) comprenant des détecteurs sensibles aux rayonnements électromagnétiques et refroidie par le doigt froid, ledit capteur définissant un axe optique (X) perpendiculaire à la surface supérieure plane (206) et centré par rapport à celle-ci ;
un écran froid (212) entourant le capteur (207), sensiblement en forme de dôme, monté sur le doigt froid (202) et de révolution autour de l'axe optique (X), et comprenant une extrémité supérieure (210), disposée entre la fenêtre (201) et le capteur (207) définissant un diaphragme (211) de forme circulaire centré sur l'axe optique (X) et une paroi latérale (209) reliant une base (205) de l'écran froid (212) à l'extrémité supérieure (210) présentant une face interne à concavité tournée vers l'axe optique (X);
**caractérisé en ce que** le système comprend :
au moins un filtre (402) de rayonnement électromagnétique passe bande ayant un coefficient de transmission prédéfini, chaque filtre étant mobile et pouvant prendre une première position dans laquelle il est placé à l'extérieur du boîtier (20) en regard de la fenêtre (201) et une deuxième position dans laquelle il est placé de sorte à ne filtrer aucun rayonnement électromagnétique reçu par le système, dans ladite première position chaque filtre présente en section dans tout plan sécant contenant l'axe optique (X) une forme concave tournée vers le capteur (207) ayant un profil à base de conique et/ou d'asphérique et réfléchit le plan focal à l'intérieur du boîtier (20) ; et,
des moyens de traitement (213) permettant d'évaluer pour chaque détecteur du capteur (207) un gain et une valeur de décalage en utilisant une première valeur fournie par ledit détecteur lorsque chaque filtre est dans la deuxième position et au moins une seconde valeur fournie par ledit détecteur lorsqu'un filtre parmi les au moins un filtre est dans la première position.

2. Système selon la revendication 1, **caractérisé en ce que** au moins un premier filtre parmi les au moins un filtre a une surface dont toute section par un plan contenant l'axe optique (X) est en forme d'ellipse ou de cercle tronqué par un plan perpendiculaire à l'axe optique (X) et de révolution autour de l'axe optique (X).

3. Système selon la revendication 1 ou 2, **caractérisé en ce que** au moins un filtre parmi les au moins un filtre réfléchit le plan focal à l'intérieur de l'écran froid (212).

4. Système selon la revendication 1 ou 2, **caractérisé en ce que** chaque foyer de l'ellipse de la section en forme d'ellipse tronquée ou du cercle de la section en forme de cercle tronqué du premier filtre est placé sur le bord de la fenêtre (201).

5. Système selon la revendication 1, 2 ou 4, **caractérisé en ce que** le boîtier (20) comprend une surface interne réfléchissant les rayonnements électromagnétiques et l'écran froid (212) comprend une surface externe absorbant les rayonnements électromagnétiques.

6. Système selon les revendications 2 et 3, **caractérisé en ce que** chaque foyer de l'ellipse de la section en forme d'ellipse tronquée ou du cercle de la section en forme de cercle tronqué du premier filtre est placé sur le bord du diaphragme (211).

7. Procédé de calibration de détecteurs sensibles aux rayonnements électromagnétiques d'un capteur mis en œuvre par le système de détection de rayonnements électromagnétiques selon l'une quelconque des revendications 1 à 6, **caractérisé en ce que** le procédé comprend :
positionner (601) un filtre parmi les au moins un filtre dans la première position ;
déclencher (602) une acquisition d'une première matrice de valeurs par le capteur (207), chaque valeur de la matrice de valeurs étant issue d'un détecteur du capteur IR (207) ;
positionner (603) ledit filtre dans la deuxième position ;
déclencher (604) une acquisition d'une deuxième matrice de valeurs par le capteur (207) ;
déterminer (605) pour chaque détecteur du capteur (207), un gain et une valeur de décalage à appliquer aux valeurs issues dudit détecteur, chaque détermination d'un gain et d'une valeur de décalage d'un détecteur utilise une valeur de la première matrice correspondant audit détecteur et une valeur de la deuxième matrice correspondant audit détecteur.

8. Programme d'ordinateur, **caractérisé en ce qu'**il comprend des instructions pour mettre en œuvre, par un dispositif (213), le procédé selon la revendication 7, lorsque ledit programme est exécuté par un processeur dudit dispositif (213).

9. Moyens de stockage, **caractérisés en ce qu'**ils stockent un programme d'ordinateur comprenant des instructions pour mettre en œuvre, par un dispositif (213), le procédé selon la revendication 7, lorsque ledit programme est exécuté par un processeur dudit dispositif (213).

## Patentansprüche

1. System zur Erkennung von elektromagnetischer Strahlung, welches umfasst:
ein Gehäuse (20), das einen Raum definiert, in welchem ein Teilvakuum herrscht, und ein Fenster (201) umfasst, das für die elektromagnetische Strahlung durchlässig ist;
einen Kühlfinger (202), der eine seitliche Wand (204) aufweist, die an einem Ende durch eine Endwand (208) verschlossen ist, die sich genau gegenüber dem Fenster (201) befindet;
einen an der Endwand (208) angebrachten Sensor (207), der eine gegenüber dem Fenster (201) angeordnete ebene obere Fläche (206) aufweist, die für die elektromagnetische Strahlung empfindliche Detektoren umfasst und
von dem Kühlfinger gekühlt wird, wobei der Sensor eine optische Achse (X) definiert, die zu der ebenen oberen Fläche (206) senkrecht ist, und in Bezug auf diese zentriert ist;
einen den Sensor (207) umgebenden Kühlschirm (212), der im Wesentlichen kuppelförmig ist, auf dem Kühlfinger (202) angebracht ist und rotationssymmetrisch um die optische Achse (X) ist, und der ein zwischen dem Fenster (201) und dem Sensor (207) angeordnetes oberes Ende (210), das eine auf der optischen Achse (X) zentrierte kreisförmige Blende (211) definiert, und eine seitliche Wand (209), die eine Grundfläche (205) des Kühlschirms (212) mit dem oberen Ende (210) verbindet und eine Innenseite mit einer der optischen Achse (X) zugewandten Konkavität aufweist, umfasst,
**dadurch gekennzeichnet, dass** das System umfasst:
wenigstens ein Bandpassfilter (402) für elektromagnetische Strahlung mit einem vordefinierten Durchlassgrad, wobei jedes Filter beweglich ist und
eine erste Position einnehmen kann, in welcher es außerhalb des Gehäuses (20) gegenüber dem Fenster (201) angeordnet ist, und eine zweite Position, in welcher es so angeordnet ist, dass es keine durch das System empfangene elektromagnetische Strahlung filtert, wobei in der ersten Position jedes Filter im Schnitt in jeder Schnittebene, welche die optische Achse (X) enthält, eine dem Sensor (207) zugewandte konkave Form mit einem Profil auf konischer und/oder asphärischer Basis aufweist und die Brennebene ins Innere des Gehäuses (20) reflektiert; und
Verarbeitungsmittel (213), die es ermöglichen, für jeden Detektor des Sensors (207) unter Verwendung eines ersten Wertes, der von dem Detektor geliefert wird, wenn sich jedes Filter in der zweiten Position befindet, und wenigstens eines zweiten Wertes, der von dem Detektor geliefert wird, wenn sich ein Filter des wenigstens einen Filters in der ersten Position befindet, einen Verstärkungsfaktor und einen Versatzwert zu ermitteln.

2. System nach Anspruch 1, **dadurch gekennzeichnet, dass** wenigstens ein erstes Filter des wenigstens einen Filters eine Oberfläche aufweist, von der jeder Schnitt entlang einer die optische Achse (X) enthaltenden Ebene die Form einer Ellipse oder eines Kreises hat, die bzw. der durch eine zur optischen Achse (X) senkrechte Ebene beschnitten und rotationssymmetrisch um die optische Achse (X) ist.

3. System nach Anspruch 1 oder 2, **dadurch gekennzeichnet, dass** wenigstens ein Filter des wenigstens einen Filters die Brennebene ins Innere des Kühlschirms (212) reflektiert.

4. System nach Anspruch 1 oder 2, **dadurch gekennzeichnet, dass** jeder Brennpunkt der Ellipse des Schnittes von der Form einer beschnittenen Ellipse oder des Kreises des Schnittes von der Form eines beschnittenen Kreises des ersten Filters auf dem Rand des Fensters (201) angeordnet ist.

5. System nach Anspruch 1, 2 oder 4, **dadurch gekennzeichnet, dass** das Gehäuse (20) eine Innenfläche umfasst, welche die elektromagnetische Strahlung reflektiert, und der Kühlschirm (212) eine Außenfläche umfasst, welche die elektromagnetische Strahlung absorbiert.

6. System nach Anspruch 2 oder 3, **dadurch gekennzeichnet, dass** jeder Brennpunkt der Ellipse des Schnittes von der Form einer beschnittenen Ellipse oder des Kreises des Schnittes von der Form eines beschnittenen Kreises des ersten Filters auf dem Rand der Blende (211) angeordnet ist.

7. Verfahren zur Kalibrierung von für die elektromagnetische Strahlung empfindlichen Detektoren eines Sensors, welches von dem System zur Erkennung von elektromagnetischer Strahlung nach einem der Ansprüche 1 bis 6 durchgeführt wird, **dadurch gekennzeichnet, dass** das Verfahren umfasst:
Positionieren (601) eines Filters des wenigstens einen Filters in der ersten Position;
Auslösen (602) einer Erfassung einer ersten Matrix von Werten durch den Sensor (207), wobei jeder Wert der Matrix von Werten von einem Detektor des IR-Sensors (207) stammt;
Positionieren (603) des Filters in der zweiten Position;
Auslösen (604) einer Erfassung einer zweiten Matrix von Werten durch den Sensor (207);
Bestimmen (605), für jeden Detektor des Sensors (207), eines Verstärkungsfaktors und eines Versatzwertes, die auf die von dem Detektor stammenden Werte anzuwenden sind, wobei jede Bestimmung eines Verstärkungsfaktors und eines Versatzwertes eines Detektors einen dem Detektor entsprechenden Wert der ersten Matrix und einen dem Detektor entsprechenden Wert der zweiten Matrix verwendet.

8. Computerprogramm, **dadurch gekennzeichnet, dass** es Anweisungen zur Durchführung, durch eine Vorrichtung (213), des Verfahrens nach Anspruch 7, wenn das Programm von einem Prozessor der Vorrichtung (213) ausgeführt wird, umfasst.

9. Speichermittel, **dadurch gekennzeichnet, dass** sie ein Computerprogramm speichern, das Anweisungen zur Durchführung, durch eine Vorrichtung (213), des Verfahrens nach Anspruch 7, wenn das Programm von einem Prozessor der Vorrichtung (213) ausgeführt wird, umfasst.

## Claims

1. Electromagnetic-radiation detection system comprising:
a casing (20) defining an enclosure in which a partial vacuum prevails, comprising a window (201) transparent to said electromagnetic radiation;
a cold finger (202) having a side wall (204) closed at one end by an end wall (208) situated in line with the window (201);
a sensor (207), mounted on the end wall (208), having a flat top surface (206) disposed facing the window (201) comprising detectors sensitive to electromagnetic radiation and cooled by the cold finger, said sensor defining an optical axis (X) perpendicular to the flat top surface (206) and centred with respect thereto;
a cold screen (212) surrounding the sensor (207), substantially in the form of a dome, mounted on the cold finger (202) and generated by rotation about the optical axis (X), and comprising a top end (210), disposed between the window (201) and the sensor (207), defining a circular-shaped diaphragm (211) centred on the optical axis (X) and a side wall (209) connecting a base (205) of the cold screen (212) to the top end (210) having an internal face with its concavity turned towards the optical axis (X);
**characterised in that** the system comprises:
at least one bandpass electromagnetic-radiation filter (402) having a predefined transmission coefficient, each filter being movable and being able to adopt a first position in which it is placed outside the casing (20) facing the window (201) and a second position in which it is placed so as to not filter any electromagnetic radiation received by the system, in said first position each filter has in cross section in any secant plane containing the optical axis (X) a concave form turned towards the sensor (207) having a profile with a conical and/or aspherical base and reflects the focal plane inside the casing (20); and
processing means (213) for evaluating, for each detector of the sensor (207), a gain and an offset value using a first value supplied by said detector when each filter is in the second position and at least one second value supplied by said detector when a filter among the at least one filter is in the first position.

2. System according to claim 1, **characterised in that** at least one first filter among the at least one filter has a surface, any cross section of which through a plane containing the optical axis (X) is in the form of an ellipse or a circle truncated by a plane perpendicular to the optical axis (X) and generated by rotation about the optical axis (X).

3. System according to claim 1 or claim 2, **characterised in that** at least one filter among the at least one filter reflects the focal plane inside the cold screen (212).

4. System according to claim 1 or claim 2, **characterised in that** each focus of the ellipse of the cross section in the form of a truncated ellipse or of the circle of the cross section in the form of a truncated circle of the first filter is placed on the edge of the window (201).

5. System according to claim 1, 2 or 4, **characterised in that** the casing (20) comprises an internal surface reflecting the electromagnetic radiation and the cold screen (212) comprises an external surface absorbing the electromagnetic radiation.

6. System according to claim 2 and claim 3, **characterised in that** each focus of the ellipse of the cross section in the form of a truncated ellipse or of the circle of the cross section in the form of a truncated circle of the first filter is placed on the edge of the diaphragm (211).

7. Method for calibrating detectors sensitive to electromagnetic radiation of a sensor used by the electromagnetic-radiation detection system according to any of claims 1 to 6, **characterised in that** the method comprises:
positioning (601) a filter among the at least one filter in the first position;
triggering (602) an acquisition of a first matrix of values by the sensor (207), each value in the matrix of values issuing from a detector of the IR sensor (207);
positioning (603) said filter in the second position;
triggering (604) an acquisition of a second matrix of values by the sensor (207);
determining (605), for each detector of the sensor (207), a gain and an offset value to be applied to the values issuing from said detector, each determination of a gain and of an offset value of a detector uses a value of the first matrix corresponding to said detector and a value of the second matrix corresponding to said detector.

8. Computer program, **characterised in that** it comprises instructions for the implementation, by a device (213), of the method according to claim 7, when said program is executed by a processor of said device (213).

9. Storage means, **characterised in that** they store a computer program comprising instructions for the implementation, by a device (213), of the method according to claim 7, when said program is executed by a processor of said device (213).
